# EUROPEAN PATENT SPECIFICATION

(11) **EP 2 873 551 B1**
(45) Date of publication and mention of the grant of the patent: **13.01.2021**
(21) Application number: 14161775.3
(22) Date of filing: 26.03.2014
(51) Int. Cl.: B60L 53/00

(54) **Driving apparatus for electric vehicle**
Vorrichtung zur Ansteuerung eines Elektrofahrzeuges
Appareil d'entraînement pour véhicule électrique

(30) Priority: 15.11.2013 KR 20130139312
(43) Date of publication of application: 20.05.2015
(73) Proprietor: LG Electronics Inc., 150-721 Seoul (KR)
(72) Inventor: Kim, Youngboong, 103-802 Seoul (KR); Lim, Junyoung, 103-802 Seoul (KR); Nam, Hojun, 103-802 Seoul (KR); Han, Seungdo, 103-802 Seoul (KR)
(74) Representative: Vossius & Partner Patentanwälte Rechtsanwälte mbB

(56) References cited:
- EP-A2- 2 020 334
- WO-A1-2013/021460
- WO-A2-2013/131738
- DE-A1-102009 007 961
- DE-A1-102011 085 731
- US-A1- 2008 271 935
- US-A1- 2009 033 251
- US-A1- 2009 033 274
- US-B2- 7 518 279
- TAE-UK JUNG ET AL: "Improved Design for Driving Characteristics in Single Phase Induction Motor with Concentrated Winding", POWER ELECTRONICS SPECIALISTS CONFERENCE, 2007. PESC 2007. IEEE, IEEE, PISCATAWAY, NJ, USA, 17 June 2007 (2007-06-17), pages 2418-2422, XP031218644, ISBN: 978-1-4244-0654-8

## Description

The present invention relates to a driving apparatus for an electric vehicle.

Recently, with increasingly stringent environmental regulations and to reduce energy costs, demand for eco-friendly electric vehicles (EVs) has increased. In the United States and Europe, electric vehicles will be forced into widespread use due to the Clean Air Conservation Act. Domestically, research into a green car has been actively conducted as a part of green growth.

A battery is provided in an electric vehicle in order to drive a motor for driving the vehicle and various electronic apparatuses. In addition, an air conditioner for air conditioning or heating is provided.

In addition, an integrated starter generator (ISG) for starting an engine and rotating a motor is provided in an electric vehicle. The ISG operates in a motoring mode for rotating the motor and a generating mode for generating a predetermined output voltage to charge a battery.

A plurality of batteries having different charging voltages may be provided in the electric vehicle. At this time, each battery may be charged in the generating mode of the ISG.

As the ISG is generally configured to generate a high output voltage, a high-voltage battery may be charged via the output voltage of the ISG but a low-voltage battery may not be charged via the output voltage of the ISG. Thus, a separate DC-DC converter is required.

That is, the DC-DC converter performs a function for decreasing the high output voltage of the ISG to a charging voltage of the low-voltage battery.

However, the DC-DC converter has a heavy weight and a large volume, thereby increasing the weight of the electric vehicle and reducing an internal space for use. In addition, the DC-DC converter may deteriorate efficiency of the electric vehicle.

Accordingly, even when a plurality of batteries having different charging voltages is provided, there is a need for a structure for charging each battery via a single ISG without a separate DC-DC converter.

In order to charge a high-voltage battery and a low-voltage battery using an ISG, rotation force of an engine should be delivered to the ISG. At this time, it is difficult to charge the high-voltage battery and the low-voltage battery using the ISG in a state in which the engine is not driven.

Accordingly, there is a need for a structure for emergency-charging a low-voltage battery even in a state in which an engine is not driven.

EP 2 020 334 A2 relates to a motor controller for an axial-gap motor having a torque command determiner which inputs a first DC voltage to a first inverter at least either when a rotor is at a halt or when the number of revolutions of the rotor is a predetermined number of revolutions or less, supplies a field axis current for changing the magnetic flux of a field of the rotor to a first stator from the first inverter such that the amount of energization is temporally changed, converts an induced voltage developed in a second stator by the supplied field axis current into a second DC voltage by a second inverter, and outputs the second DC voltage, thereby charging a second battery.

WO 2013/131738 A2 relates to a vehicle having a multi-phase electrical machine, comprising a first partial on-board network having a first nominal DC voltage and a second partial on-board network having a second nominal DC voltage.

US2009/033274 A1 relates to an inverter system for use in a vehicle having a first energy source and a second energy source.

US 2009/033251 A1 relates to an inverter system comprising a six-phase motor having a first set of three-phase windings and a second set of three-phase windings and a three-phase motor having a third set of three-phase windings, wherein the third set of three-phase windings is coupled to the first set of three-phase windings and the second set of three-phase windings.

DE 10 2009 007961 A1 relates to a drive system, having an energy storage and a unipolar voltage direct current link for supplying current to two inverters, respectively, and an electric motor with stator windings that are inductively coupled with each other.

US 2008/271935 A1 relates to an electrical machine apparatus that includes a rotor coupled to an armature and a stator surrounding the rotor. The stator has a series of coils; the series of coils is configured into a first group of coils and a second group of coils, the first group of coils is electrically and magnetically isolated from the second group of coils.

TAE-UK-JUNG et al. "Improved Design for Driving Characteristics in Single Phase Induction Motor with Concentrated Winding", Power Electronics Specialists Conference, 2007, IEEE PESC, pages 2418-2422, XP031218644, ISBN: 978-1-4244-0654-8 is focused on the design of a rotor bar's skew and winding turns for a concentrated winding induction motor. The control method of harmonic parasitic torque in concentrated winding induction motor is proposed and its practicality is validated through an experiment.

US 7 518 279 B2 relates to an electric motor system including a first inverter, a second inverter, and a motor electrically coupled to the first and the second inverters. The motor includes a stator including a plurality of slots formed therein and a plurality of windings.

Accordingly, the present invention is directed to a driving apparatus for an electric vehicle that substantially obviates one or more problems due to limitations and disadvantages of the related art.

An object of the present invention is to provide a driving apparatus for an electric vehicle capable of selectively charging a plurality of batteries having different charging voltages without using a separate DC-DC converter.

Another object of the present invention is to provide a driving apparatus for an electric vehicle capable of outputting required torque upon engine startup or upon normal driving by using a charging voltage of any one of a high-voltage battery and a low-voltage battery or both the charging voltages of the high-voltage battery and the low-voltage battery.

Another object of the present invention is to provide a driving apparatus for an electric vehicle capable of charging the other batteries using any one battery in a state in which an engine is stopped.

Another object of the present invention is to provide a driving apparatus for an electric vehicle having a low weight and a small volume and capable of making better use of a space.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The invention is defined in the independent claim. Dependent claims describe preferred embodiments. To achieve these objects and other advantages and in accordance with the purpose of the invention, as embodied and broadly described herein, a driving apparatus for an electric vehicle including a motor including a stator having a main winding and an auxiliary winding and a rotor rotating due to magnetic interaction between the main winding and the auxiliary winding, an engine configured to selectively rotate the rotor, a motor controller including a first inverter connected to the main winding and a second inverter connected to the auxiliary winding, a first battery connected to the first inverter and configured to drive the motor or configured to be chargeable by the motor, and a second battery connected to the second inverter, configured to be chargeable by the motor, and having a charging voltage lower than that of the first battery.
The driving apparatus further comprises a field current controller electrically connected to the rotor of the motor, wherein the rotor includes a field winding, and wherein the field current controller is electrically connected to the field winding of the rotor. A first switch for connecting an output end of the first battery and an output end of the second battery is provided, and a second switch is provided between the first switch and the second battery. An interrupter switch is provided between the field current controller and the field winding, which is configured to protect the field current controller from a boosted voltage occurred when the second battery is charged with a charging voltage of the first battery in a state in which the engine and the rotor are stopped.

The motor controller may generate required torque via the charging voltage of at least one of the first battery and the second battery based on at least one of residual quantities of the first battery and the second battery and a driving state of the engine.

The motor controller may charge at least one of the first battery and the second battery.

The motor controller may generate required torque and, at the same time, charges any one battery.

The motor controller may generate required torque via the first battery and the first inverter when the engine is driven.

The motor controller may generate maximum torque via the first battery, the first inverter, the second battery and the second inverter.

The motor controller may generate required torque via the first battery and the first inverter and charge the second battery via the second inverter, when the engine is driven.

The motor controller may charge the first battery and the second battery via the first inverter and the second inverter, when the engine is driven.

The motor controller may charge the second battery via the first inverter and the second inverter with the charging voltage of the first battery, when the engine is stopped, and the motor may operate as a transformer according to a turn ratio of the main winding to the auxiliary winding.

The auxiliary winding may be wound using a hairpin winding method, and the auxiliary winding may be located closer to the rotor than the main winding.

The number of switch elements of the first inverter may be equal to or greater than the number of switch elements of the second inverter, the first inverter and the second inverter may be electrically connected, a first switch for connecting an output end of the first battery and an output end of the second battery may be provided, and a second switch may be provided between the first switch and the second battery.

The motor controller may turn the first switch on and turn the second switch off to generate required torque via the first battery, the first inverter and the second inverter.

When the engine is driven, the motor controller may turn the first switch off and turn the second switch on to generate required torque via the first battery and the first inverter and to charge the second battery via the second inverter.

When the engine is driven, the motor controller may turn the first switch off and turn the second switch on to charge the first battery via the first inverter and to charge the second battery via the second inverter.

When the engine is stopped, the motor controller may turn the first switch off and turn the second switch on to charge the second battery via the first inverter and the second inverter with the charging voltage of the first battery, and the motor may operate as a transformer according to a turn ratio of the main winding to the auxiliary winding.

In addition, the main winding and the auxiliary winding may be wound using a distributed winding method or a centralized winding method.

The turn ratio of the main winding to the auxiliary winding may be 2:1 or 5:1.

The rotor may have a field winding.

The motor controller may vector-control the first inverter and the second inverter to generate negative torque in a regenerating mode.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIGs. 1 and 2 are diagrams showing the concepts of a driving apparatus for an electric vehicle
FIG. 3 is a diagram showing the concept of various embodiments of a main winding and an auxiliary winding of a stator
FIGs. 4 to 8 are circuit diagrams illustrating various operation states of a driving apparatus for an electric
FIGs. 9 to 12 are diagrams illustrating various operation states of a driving apparatus for an electric vehicle
FIG. 13 is a diagram showing the concept of a field current controller of a driving apparatus for an electric vehicle according to the embodiment of the present invention.

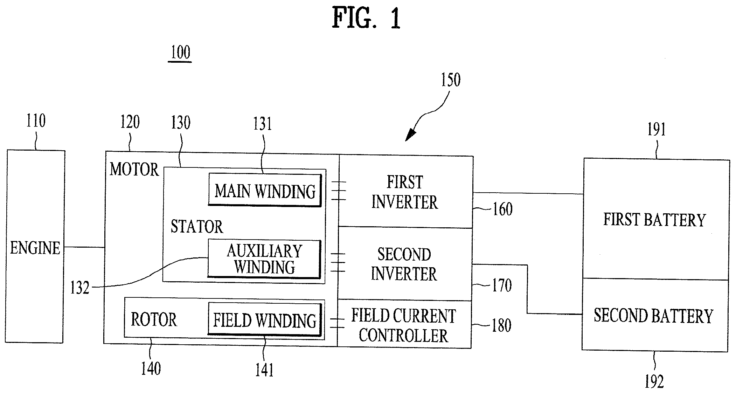

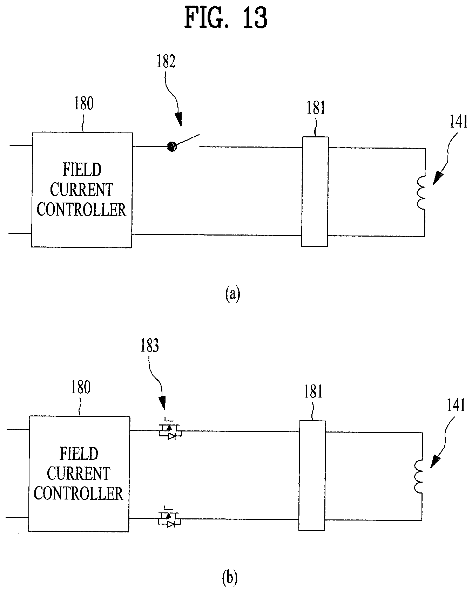

In the following, although indicated as "embodiments", figures 1-12 merely serve an illustrative purpose, the only embodiment covered by the independent claim being that of figure 13.

Hereinafter, a driving apparatus for an electric vehicle (hereinafter, also referred to as a driving apparatus) according to one embodiment of the present invention will be described in detail with reference to the accompanying drawings. The accompanying drawings are only provided for describing the present invention in detail and are not intended to limit the technical range of the present invention.

In addition, the same or corresponding components are designated by the same reference numerals, and a description thereof will not be repeated. For convenience of description, the size and shape of each component may be exaggerated or reduced.

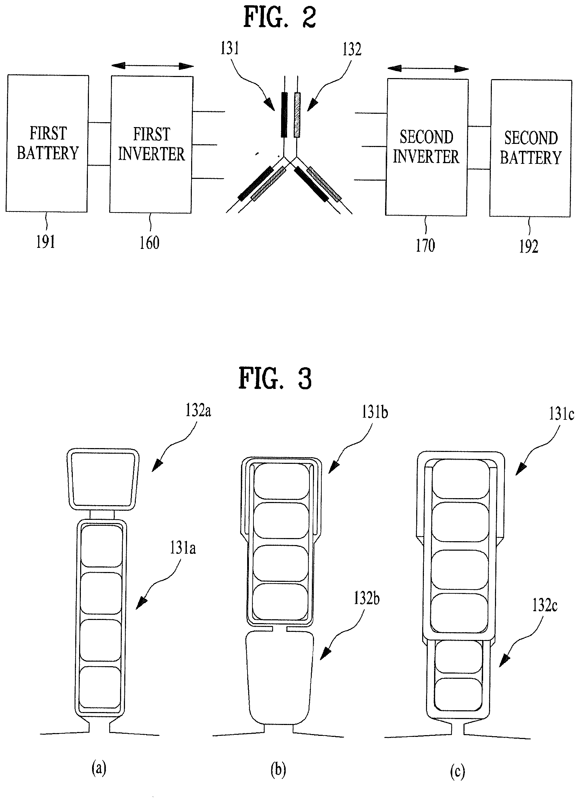

FIGs. 1 and 2 are diagrams showing the concepts of a driving apparatus 100 for an electric vehicle according to one embodiment of the present invention.

Referring to FIG. 1, the driving apparatus 100 according to one embodiment of the present invention includes a motor 120, an engine 110, a first battery 191, a second battery 192 and a motor controller 150.

Here, the second battery 192 and the first battery 191 have different charging voltages. The charging voltage of the second battery 192 is lower than that of the first battery 191. In one embodiment, the first battery 191 may have a charging voltage of 43 V or 48V and the second battery 192 may have a charging voltage of 12 V.

In addition, the first battery 191 may be referred to as a high-voltage battery and the second battery 192 may be referred to as a low-voltage battery. In addition, the first battery 191 may have a maximum charging voltage of 60 V and the second battery 192 may have a maximum charging voltage of 24 V in case of a full-size car.

The motor 120 may include a stator 130 and a rotor 140. In addition, the motor 120 may include a stator 130 having a main winding 131 and an auxiliary winding 132 and a rotor 140 rotating due to magnetic interaction between the main winding 131 and the auxiliary winding 132. The rotor 140 rotates in the stator 130 via electromagnetic interaction with the stator 130.

The stator 130 may include armature coils 131 and 132 in order to form a magnetic flux. Accordingly, the stator 130 may be referred to as an electromagnet.

The rotor 140 may rotate within the stator 130. The rotor 140 may include a field winding 141. Here, the motor controller 150 may control the output of the rotor 140 by adjusting the field current value and the armature current value respectively applied to the field winding 141 and the armature coils 131 and 132.

More specifically, field current may be applied to the field winding 141 and armature current may be applied to the armature coils 131 and 132. The output of the rotor 140 may be determined according to the field current value and the armature current value.

In addition, the motor 120 includes the rotor 140 having the field winding 141 formed by winding a field coil. In addition, the motor 120 includes the stator 130 having the armature windings 131 and 132. The motor 120 may be a field winding motor.

The main winding 131 and the auxiliary winding 132 are provided in the stator 130. In addition, the armature winding may have a dual structure. More specifically, the stator 130 has a dual winding structure. The dual winding structure of the stator 130 will be described below.

In addition, the stator 130 includes the main winding 131 and the auxiliary winding 132. Two motors having different output voltages may be unified by connecting individual inverters to the windings 131 and 132 of the stator 130.

The driving apparatus 100 includes a first inverter 160 and a second inverter 170 electrically connected to the stator 130 of the motor 120.

The first inverter 160 is connected to the main winding 131 of the stator 130 and the second inverter 170 is connected to the auxiliary winding 132 of the stator 130. At this time, the first inverter 160 may be referred to as a main inverter and the second inverter 170 may be referred to as an auxiliary inverter.

The first inverter 160 is electrically connected to the first battery 191. In addition, the second inverter 170 is electrically connected to the second battery 192.

The driving apparatus 100 may include the field current controller 180 electrically connected to the rotor 140 of the motor 120. The motor controller 150 may include the field current controller 180 connected to the field winding 141. More specifically, the field current controller 180 is electrically connected to the field winding 141 of the rotor 140.

The motor 120 may operate in a motoring mode such as engine startup or torque assist and a generating mode for generating a predetermined output voltage.

The generating mode may include a normal generating mode and a regenerating mode. Accordingly, the motor 120 may be referred to as a driving motor for an electric vehicle or an integrated starter generator (ISG).

At this time, in the generating mode, the motor 120 may selectively charge the first battery 191 and the second battery 192 using the output voltage. The motor 120 may simultaneously charge the first battery 191 and the second battery 192 using the output voltage.

In addition, the motor 120 may rotate by driving the engine 110, thereby operating in the generating mode. In addition, the motor 120 may operate in the generating mode even in a state in which the engine 110 is stopped, which will be described below.

The engine 110 rotates the motor. More specifically, the engine 110 selectively rotates the rotor 140. A clutch (not shown) for delivering rotation force of the engine to the rotor 140 may be selectively provided between the engine 110 and the motor 120. The clutch may be an electronic clutch.

The first battery 191 may drive the motor 120 via a charging voltage. In addition, the first battery 191 may be charged by the motor 120. The first battery 191 may drive the motor alone via the charging voltage in the motoring mode.

More specifically, the voltage charged in the first battery 191 is supplied to the main winding 131 of the stator 130 via the first inverter 160. In addition, in the generating mode, the first battery 191 may be charged via the first inverter 160.

The second battery 192 may be charged by the motor 120. In addition, the second battery 192 may drive the motor 120 via the charging voltage.

The second battery 192 may not drive the motor 120 alone but may drive the motor 120 together with the first battery 191. That is, the charging voltage of the second battery 192 may serve to assist torque of a predetermined portion in the motoring mode via the charging voltage of the first battery 191.

The motor controller 150 may charge at least one of the first battery 191 and the second battery 192.

More specifically, the motor controller 150 may selectively charge the first battery 191 or the second battery 192 based on at least one of the residual quantities of the first battery 191 and the second battery 192 and the driving state of the engine 110. The motor controller 150 may selectively charge the first battery 191 or the second battery 192 by adjusting the field current value applied to the field winding 141.

The motor controller 150 may generate required torque via the charging voltage of at least one of the first battery 191 and the second battery 192 based on at least one of the residual quantities of the first battery 191 and the second battery 192 and the driving state of the engine 110.

More specifically, the motor controller 150 may generate required torque by utilizing the charging voltage of the first battery 191 alone. In addition, the motor controller 150 may generate required torque by utilizing both the charging voltages of the first battery 191 and the second battery 192.

In summary, the motor controller 150 may generate required torque via the charging voltage of at least one of the first battery 191 and the second battery 192, or charge at least one of the first battery 191 and the second battery 192 or generate required torque via the first battery 191 and, at the same time, charge the second battery 192, based on at least one of the residual quantities of the first battery 191 and the second battery 192 and the driving state of the engine 110.

The motor controller 150 may generate different output voltages via the first inverter 160 and the second inverter 170 without a separate DC-DC converter.

In the motor controller 150, the output voltage of the stator 130 and the field current value corresponding to the output voltage of the stator 130 may be stored. More specifically, in the motor controller 150, the output voltage of the stator 130 and the field current value corresponding to the output voltage of the stator 130 may be stored in the form of a look-up table.

The motor controller 150 may include the first inverter 160 connected to the main winding 131 and the second inverter 170 connected to the auxiliary winding 132. The motor controller 150 may include the field current controller 180 connected to the field winding 141.

The driving state of the engine 110 may include an on/off state of the engine and a revolutions per minute (RPM) of the engine.

The motor controller 150 may be provided integrally with the motor 120. More specifically, the motor 120, the first and second inverters 160 and 170 and the field current controller 180 may be integrally provided. In this case, an internal space of the electric vehicle is secured.

In addition, the motor controller 150 may be cooled via cooling water for cooling the motor 120. Accordingly, cooling efficiency of the motor controller 150 may be increased.

Alternatively, only the first and second inverters 160 and 170 and the field current controller 180 may be integrally provided. The motor controller 150 may be provided in the electric vehicle to be separated from the motor 120. In this case, the motor controller 150 and the motor 120 may be electrically connected via a cable.

FIG. 3 is a diagram showing the concept of various embodiments of a main winding 131 (131a, 131b and 131c) and an auxiliary winding 132 (132a, 132b and 132c) of a stator according to the present invention.

The main winding 131 and the auxiliary winding 132 may be wound using a distributed winding method or a centralized winding method. The main winding 131 and the auxiliary winding 132 may be wound using a hairpin winding method. The main winding 131 and the auxiliary winding 132 may be wound using the distributed winding method, the centralized winding method or the hairpin winding method.

Referring to FIG. 3(a), the main winding 131a may be wound using the hairpin winding method and the auxiliary winding 132a may be wound using the distributed winding method. At this time, the main winding 131a may be located closer to the center of the stator than the auxiliary winding 132a.

Referring to FIG. 3(b), the main winding 131b may be wound using the hairpin winding method and the auxiliary winding 132b may be wound using the distributed winding method. At this time, the auxiliary winding 132b may be located closer to the center of the stator than the main winding 131b.

Referring to FIG. 3(c), the main winding 131c may be wound using the hairpin winding method and the auxiliary winding 132c may be wound using the hairpin winding method. At this time, the auxiliary winding 132c may be located closer to the center of the stator than the main winding 131c. More specifically, the auxiliary winding 132c may be located closer to the rotor than the main winding 131c. That is, a distance between the auxiliary winding 132c and the rotor may be less than a distance between the main winding 131c and the rotor.

If workability and motor efficiency are considered, the main winding 131 and the auxiliary winding 132 may be wound using the hairpin winding method. For torque efficiency, the auxiliary winding 132 may be located closer to the center of the stator than the main winding 131.

The turn ratio of the main winding 131 to the auxiliary winding 132 may be 2:1 or 5:1. In one embodiment, the turn ratio of the main winding 131 to the auxiliary winding 132 may be 4:1. The turn ratio may be variously determined according to capacity of the first battery 191 and the second battery 192 and the required torque of the motor 120.

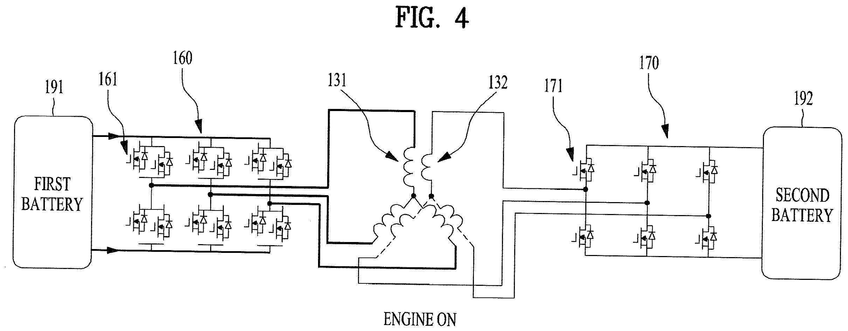

FIGs. 4 to 8 are circuit diagrams illustrating various operation states of a driving apparatus for an electric vehicle according to a first embodiment of the present invention.

In particular, the driving apparatus for the electric vehicle according to the first embodiment may separately operate the first battery 191 and the second battery 192 to operate in the motoring mode and the generating mode.

More specifically, the first inverter 160 connected to the first battery 191 may drive the motor 120 in the motoring mode upon engine startup (cranking) or upon engine driving, thereby generating required torque. In addition, in the generating mode, the first inverter 160 may charge the first battery 191.

The second inverter 170 connected to the second battery 192 may serve to assist required torque upon engine startup. In addition, in the generating mode, the second inverter 170 charges the second battery 192. The motor controller 150 may individually control and operate the first inverter 160 and the second inverter 170.

The number of switch elements 161 of the first inverter 160 may be equal to or greater than the number of switch elements 171 of the second inverter 170. In one embodiment, when the number of switch elements 161 of the first inverter 160 is 12, the number of switch elements 171 of the second inverter 170 may be 6. In particular, the first inverter 160 may have a structure in which a pair of switch elements 161 is connected in parallel.

FIG. 4 shows an operation state in which the motoring mode of the motor 120 is implemented by the first inverter 160 alone.

Referring to FIG. 4, the motor controller 150 may generate required torque via the first battery 191 and the first inverter 160 upon engine driving.

More specifically, when the electric motor needs to accelerate, required torque may be received from the controller of the electric vehicle. At this time, when it is determined that the second battery 192 does not need to be charged, the motor controller 150 may generate required torque by the first inverter 191 alone. In addition, required torque output from the first inverter 191 may assist torque output from the engine.

The rotor 140, the main winding 131 and the first inverter 160 may be referred to as a first motor portion and the rotor 140, the auxiliary winding 132 and the second inverter 170 may be referred to as a second motor portion. Referring to FIG. 4, the first motor portion operates in the motoring mode and the second motor portion is stopped.

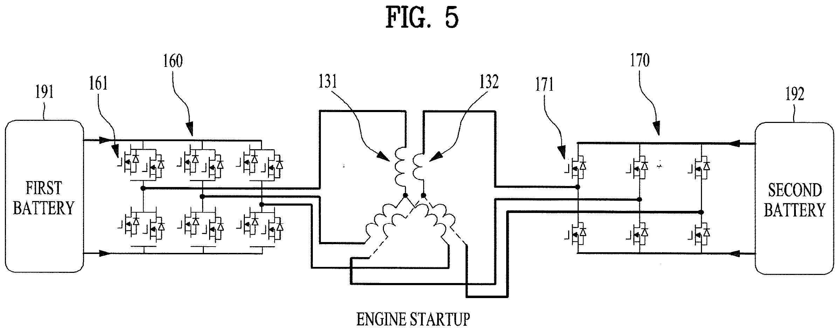

FIG. 5 shows an operation state in which the motoring mode is implemented upon engine startup.

Referring to FIG. 5, the motor controller 150 may generate maximum torque via the first battery 191, the first inverter 160, the second battery 192 and the second inverter 170 upon engine startup.

More specifically, in a state in which the engine 110 is stopped, a cranking signal may be received from the controller of the electric vehicle. At this time, both the first inverter 160 and the second inverter 170 may operate in the motoring mode to generate maximum torque.

In one embodiment, when the first motor portion generates torque of 40 Nm and the second motor portion generates torque of 10 Nm, total output torque may be 50 Nm. The output torque ratio of the first motor portion and the second motor portion may be determined according to the turn ratio of the main winding 131 to the auxiliary winding 132, as described above.

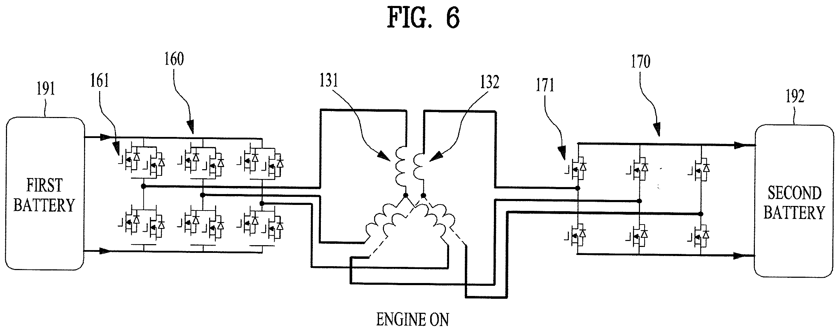

FIG. 6 shows an operation state in which the motoring mode and the generating mode are simultaneously implemented.

The motor controller 150 may generate required torque via the first battery 191 and the first inverter 160 and charge the second battery 192 via the second inverter 170, when the engine 110 is driven.

More specifically, required assist torque may be received from the controller of the electric vehicle while the electric vehicle is driven. At this time, the second battery 192 may need to be continuously charged. The motor controller 150 may control the first inverter 160 and the second inverter 170 such that the first motor portion performs the motoring operation and the second motor portion performs the generating operation.

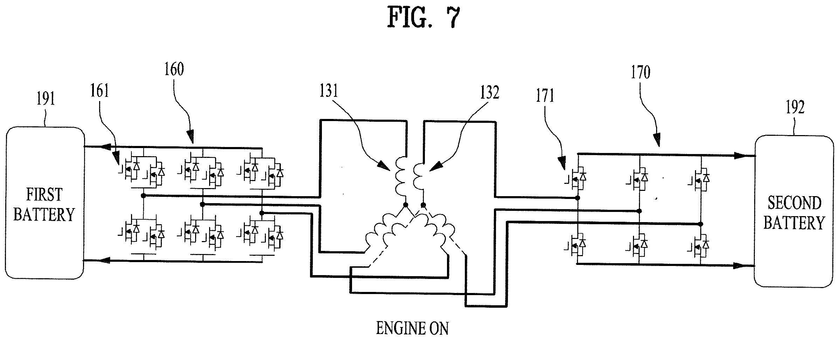

FIG. 7 shows an operation state in which the first battery 191 and the second battery 192 are simultaneously charged.

The motor controller 150 may charge the first battery 191 and the second battery 192 via the first inverter 160 and the second inverter 170, when the engine is driven. In other words, the motor controller 150 may charge the first battery 191 via the first inverter 160 and charge the second battery 192 via the second inverter 170, when the engine is driven.

More specifically, when the electric vehicle is stopped or decelerated, both the first and second inverters 160 and 170 may operate in the generating mode to charge the batteries 160 and 170. In particular, the motor controller 150 may vector-control the inverters 160 and 170 so as to generate negative torque in the regenerating mode.

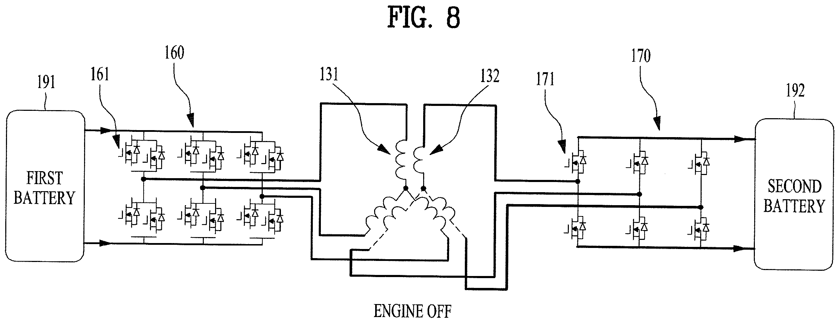

FIG. 8 shows an operation state in which the second battery 192 is charged with the charging voltage of the first battery 191 in a state in which the engine is stopped.

The motor controller 150 may charge the second battery 192 via the first inverter 160 and the second inverter 170 with the charging voltage of the first battery 191 and the motor 120 may operate as a transformer according to the turn ratio of the main winding 131 to the auxiliary winding 132, when the engine 110 is stopped.

More specifically, the field winding 141, the main winding 131 and the auxiliary winding 132 operate as the transformer to change the charging voltage of the first battery 191 via the first inverter 160 and the second inverter 170, thereby charging the second battery 192.

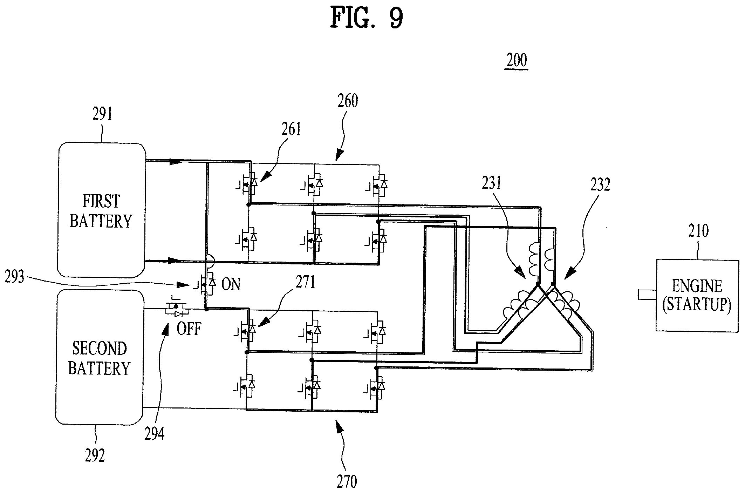

FIGs. 9 to 12 are diagrams illustrating various operation states of a driving apparatus for an electric vehicle according to a second embodiment of the present invention.

The charging apparatus 200 for the electric vehicle according to the second embodiment is different from the charging apparatus 100 for the electric vehicle according to the first embodiment as follows.

In the charging apparatus 200 according to the second embodiment, the number of switching elements 261 of the first inverter 260 is equal to the number of switching elements 271 of the second inverter 270.

In addition, the first inverter 260 and the second inverter 270 are electrically connected. In addition, a first switch 293 may be provided between the first inverter 260 and the second inverter 270 and a second switch 294 may be provided between the second inverter 270 and the second battery 292.

In the first embodiment, the first inverter 160 and the second inverter 170 are electrically disconnected. More specifically, the first inverter 160 and the second inverter 170 individually operate in a state of being electrically disconnected from each other, except the case in which the motor 120 is used as a transformer.

However, in the second embodiment, the first inverter 260 and the second inverter 270 may be electrically connected and the switching element 271 of the second inverter 270 may be shared in a specific operation mode.

Even in the second embodiment, similarly to the first embodiment, the main winding 231, the first inverter 260 and the first battery 291 are electrically connected and the auxiliary winding 232, the second inverter 270 and the second battery 292 are electrically connected.

FIG. 9 shows an operation state in which the motoring mode is implemented via the charging voltage of the first battery 291.

The motor controller may turn the first switch 293 on and turn the second switch 294 off, thereby generating required torque via the charging voltage of the first battery 291.

At this time, the switch elements 261 and 271 of the first inverter 260 and the second inverter 270 are shared through power of the first battery 291, thereby generating required torque.

In one embodiment, the switch elements 261 and 271 of the first and second inverters 260 and 270 are shared, thereby generating cranking torque when the engine 210 starts up via a total of 12 switch elements.

In addition, when the electric vehicle needs to be accelerated while the engine 210 is driven, required torque may be received from the controller of the electric vehicle.

At this time, when the second battery 292 does not need to be charged, the motor controller may generate required torque using only the charging voltage of the first battery 291. In addition, the required torque may assist torque output from the engine.

In this case, the first motor portion operates in the motoring mode and the second motor portion does not operate in the motoring mode and the switching element is only shared.

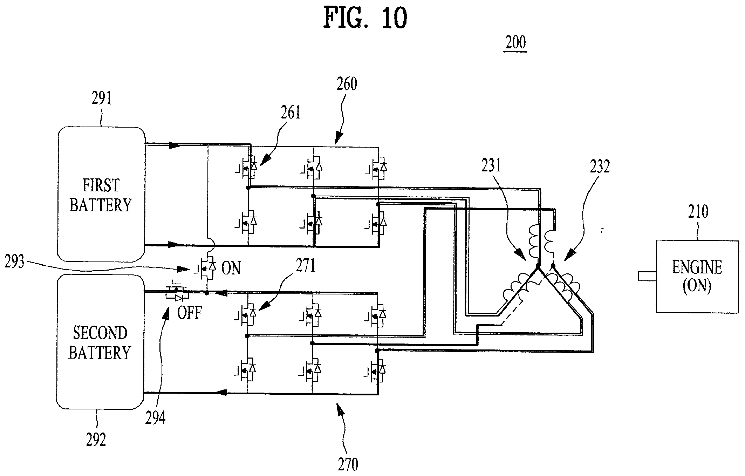

FIG. 10 shows an operation state in which the motoring mode and the generating mode are simultaneously implemented.

The motor controller may turn the first switch 293 off and turn the second switch 294 on when the engine is driven, thereby generating required torque via the first battery 291 and the first inverter 260 and charging the second battery 292 via the second inverter 270.

By turning the first switch 293 off, the first inverter 260 and the second inverter 270 are electrically disconnected so as to independently operate.

More specifically, while the electric vehicle is driven, required assist torque may be received from the controller of the electric vehicle.

At this time, the second battery may need to be continuously charged. The motor controller may control the first inverter 260 and the second inverter 270 such that the first motor portion operates in the motoring mode and the second motor portion operates in the generating mode.

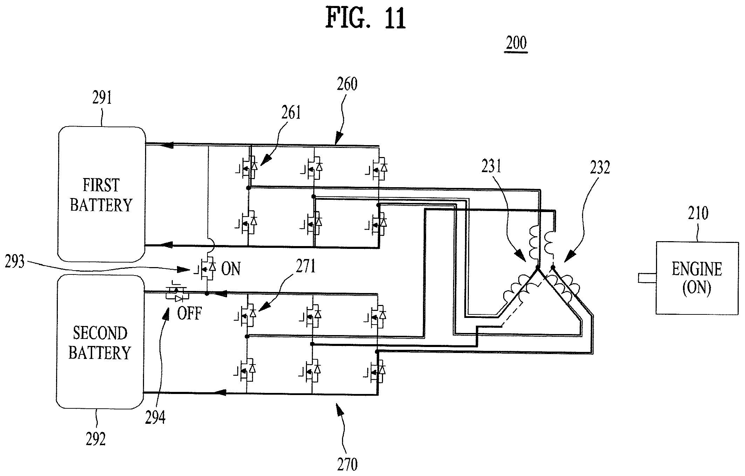

FIG. 11 shows an operation state in which the first battery 291 and the second battery 292 are simultaneously charged.

The motor controller may charge the first battery 291 and the second battery 292 via the first inverter 260 and the second inverter 270, when the engine 210 is driven.

At this time, the motor controller turns the first switch 293 off and turns the second switch 294 on. That is, by turning the first switch 293 off, the first inverter 260 and the second inverter 270 are electrically disconnected to independently operate.

More specifically, when the electric vehicle is stopped or decelerated, the first and second inverters 260 and 270 operate as generators to charge the batteries 291 and 292. In particular, the motor controller may vector-control the inverters 260 and 270 so as to generate negative torque in the regenerating mode.

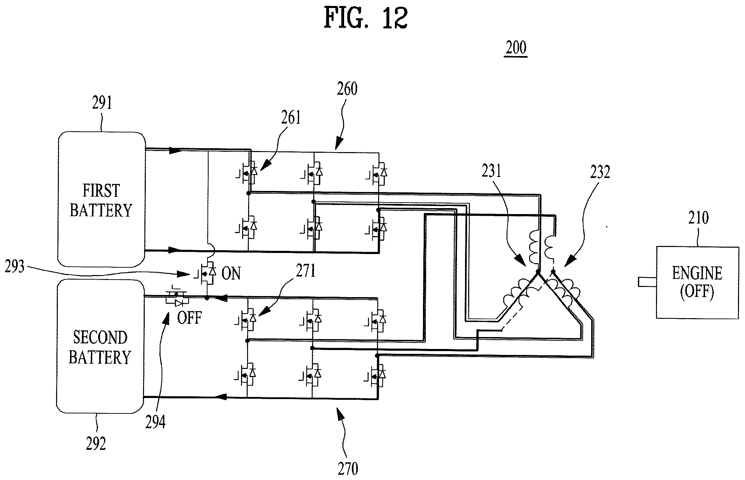

FIG. 12 shows an operation state in which the second battery 292 is charged with the charging voltage of the first battery 291 in a state in which the engine 210 is stopped.

The motor controller may charge the second battery 292 via the first inverter 260 and the second inverter 270 with the charging voltage of the first battery 191 and the motor may operate as a transformer according to the turn ratio of the main winding 231 to the auxiliary winding 232, when the engine 110 is stopped.

At this time, the motor controller turns the first switch 293 off and turns the second switch 294 on. That is, by turning the first switch 293 off, the first inverter 260 and the second inverter 270 are electrically disconnected to independently operate.

More specifically, the field winding, the main winding 231 and the auxiliary winding 232 operate as the transformer to change the charging voltage of the first battery 291 via the first inverter 260 and the second inverter2170, thereby charging the second battery 292.

FIG. 13 is a diagram showing the concept of a field current controller 180 of a driving apparatus for an electric vehicle according to one embodiment of the present invention.

When the second battery 192 is charged with the charging voltage of the first battery 191 in a state in which the engine is stopped, transformation is performed by the turn ratio. More specifically, when the second battery 192 is charged with the charging voltage of the first battery 191 in a state in which the engine and the rotor are stopped, a boosted voltage may be applied to the field winding 141.

Accordingly, the circuit of the field current controller 180 needs to be protected and thus an interrupter switch may be provided between the field current controller 180 and the field winding 141.

The interrupter switch may be a relay switch 182 or a high-voltage switch for circuit interruption 183.

The rotor 140 has a field winding. For example, the rotor 140 may have a permanent magnet, instead of the field winding.

As described above, the driving apparatus for the electric vehicle according to one embodiment of the present invention has the following effects.

It is possible to output different required torque upon engine startup or upon normal driving, by utilizing any one or both of charging voltages of a high-voltage battery and a low-voltage battery.

It is possible to selectively charge a plurality of batteries having different charging voltages without using a separate converter.

In addition, it is possible to charge the other batteries using any one battery in a state in which an engine is stopped.

It will be apparent to those skilled in the art that various modifications and variations can be made in the present invention without departing from the scope of the inventions. Thus, it is intended that the present invention covers the modifications and variations of this invention provided they come within the scope of the appended claims.

## Claims

1. A driving apparatus for an electric vehicle, comprising:
a motor (120) including a stator (130) having a main winding (131) and an auxiliary winding (132) and a rotor (140) rotating due to magnetic interaction between the main winding (131) and the auxiliary winding (132);
an engine (110) configured to selectively rotate the rotor (140);
a motor controller (150) including a first inverter (160, 260) connected to the main winding (131) and a second inverter (170, 270) connected to the auxiliary winding (132);
a first battery (191, 291) connected to the first inverter (160, 260) and configured to drive the motor (120) or configured to be chargeable by the motor (120);
a second battery (192, 292) connected to the second inverter (170, 270), configured to be chargeable by the motor (120), and having a charging voltage lower than that of the first battery (191, 291), and
**characterized in that**:
further comprising a field current controller (180) electrically connected to the rotor (140) of the motor (120), wherein the rotor (140) includes a field winding (141), and wherein the field current controller (180) is electrically connected to the field winding (141) of the rotor,
a first switch (293) for connecting an output end of the first battery (291) and an output end of the second battery (292) is provided, and a second switch (294) is provided between the first switch (293) and the second battery (292), and
wherein an interrupter switch is provided between the field current controller (180) and the field winding (141), which is configured to protect the field current controller (180) from a boosted voltage occurred when the second battery (192) is charged with a charging voltage of the first battery (191) in a state in which the engine (110) and the rotor (140) are stopped.

2. The driving apparatus for the electric vehicle according claim 1, wherein the motor controller (150) generates required torque via the first battery (191) and the first inverter (160) when the engine (110) is driven.

3. The driving apparatus for the electric vehicle according to any one of claims 1 or 2, wherein the motor controller (150) generates maximum torque via the first battery (191), the first inverter (160), the second battery (192) and the second inverter (170).

4. The driving apparatus for the electric vehicle according to any one of claims 1 to 3, wherein the motor controller (150) generates required torque via the first battery (191) and the first inverter (160) and charges the second battery (192) via the second inverter (170), when the engine (110) is driven.

5. The driving apparatus for the electric vehicle according to any one of claims 1 to 4, wherein the motor controller (150) charges the first battery (191) and the second battery (192) via the first inverter (160) and the second inverter (170), when the engine (110) is driven.

6. The driving apparatus for the electric vehicle according to any one of claims 1 to 5, wherein:
the motor controller (150) charges the second battery (192) via the first inverter (160) and the second inverter (170) with the charging voltage of the first battery (191), when the engine (110) is stopped, and
the motor (120) operates as a transformer according to a turn ratio of the main winding (131) to the auxiliary winding (132).

7. The driving apparatus for the electric vehicle according to any one of claims 1 to 6, wherein:
the auxiliary winding (132) is wound using a hairpin winding method, and
the auxiliary winding (132) is located closer to the rotor than the main winding (131).

8. The driving apparatus for the electric vehicle according to any one of claims 1 to 7, wherein the motor controller (150) turns the first switch (293) on and turns the second switch (294) off to generate required torque via the first battery (291), the first inverter (260) and the second inverter (270).

9. The driving apparatus for the electric vehicle according to any one of claims 1 to 8, wherein, when the engine (210) is driven, the motor controller (150) turns the first switch (293) off and turns the second switch (294) on to generate required torque via the first battery (291) and the first inverter (260) and to charge the second battery (292) via the second inverter (270).

10. The driving apparatus for the electric vehicle according to any one of claims 1 to 9, wherein, when the engine (210) is driven, the motor controller turns the first switch (293) off and turns the second switch (294) on to charge the first battery (291) via the first inverter (260) and to charge the second battery (292) via the second inverter (270).

11. The driving apparatus for the electric vehicle according to any one of claims 1 to 10, wherein:
when the engine (210) is stopped, the motor controller turns the first switch (293) off and turns the second switch (294) on to charge the second battery (292) via the first inverter (260) and the second inverter (270) with the charging voltage of the first battery (291), and
the motor (120) operates as a transformer according to a turn ratio of the main winding (231) to the auxiliary winding (232).

## Patentansprüche

1. Antriebsvorrichtung für ein Elektrofahrzeug, mit:
einem Motor (120), der einen Stator (130) mit einer Hauptwicklung (131) und einer Hilfswicklung (132) und einen Rotor (140) aufweist, der sich aufgrund einer magnetischen Wechselwirkung zwischen der Hauptwicklung (131) und der Hilfswicklung (132) dreht;
einem Verbrennungsmotor (110), der konfiguriert ist, selektiv den Rotor (140) zu drehen;
einer Motorsteuereinheit (150), der einen ersten Wechselrichter (160, 260), der mit der Hauptwicklung (131) verbunden ist, und einen zweiten Wechselrichter (170, 270) aufweist, der mit der Hilfswicklung (132) verbunden ist;
einer ersten Batterie (191, 291), die mit dem ersten Wechselrichter (160, 260) verbunden und konfiguriert ist, den Motor (120) anzutreiben, oder konfiguriert ist, durch den Motor (120) aufladbar zu sein;
einer zweiten Batterie (192, 292), die mit dem zweiten Wechselrichter (170, 270) verbunden ist, konfiguriert ist, durch den Motor (120) aufladbar zu sein, und eine niedrigere Ladespannung als die erste Batterie (191, 291) aufweist, und
**dadurch gekennzeichnet, dass**:
sie ferner eine Feldstromsteuereinheit (180) aufweist, die mit dem Rotor (140) des Motors (120) elektrisch verbunden ist, wobei der Rotor (140) eine Feldwicklung (141) aufweist, und wobei die Feldstromsteuereinheit (180) mit der Feldwicklung (141) des Rotors elektrisch verbunden ist,
ein erster Schalter (293) zum Verbinden eines Ausgangsendes der ersten Batterie (291) und eines Ausgangsendes der zweiten Batterie (292) vorgesehen ist, und ein zweiter Schalter (294) zwischen dem ersten Schalter (293) und der zweiten Batterie (292) vorgesehen ist, und
wobei ein Unterbrecherschalter zwischen der Feldstromsteuereinheit (180) und der Feldwicklung (141) vorgesehen ist, der konfiguriert ist, die Feldstromsteuereinheit (180) vor einer erhöhten Spannung zu schützen, die auftritt, wenn die zweite Batterie (192) mit einer Ladespannung der ersten Batterie (191) in einem Zustand geladen wird, in dem der Verbrennungsmotor (110) und der Rotor (140) gestoppt sind.

2. Antriebsvorrichtung für das Elektrofahrzeug nach Anspruch 1, wobei die Motorsteuereinheit (150) ein erforderliches Drehmoment über die erste Batterie (191) und den ersten Wechselrichter (160) erzeugt, wenn der Verbrennungsmotor (110) betrieben wird.

3. Antriebsvorrichtung für das Elektrofahrzeug nach Anspruch 1 oder 2, wobei die Motorsteuereinheit (150) ein maximales Drehmoment über die erste Batterie (191), den ersten Wechselrichter (160), die zweite Batterie (192) und den zweiten Wechselrichter (170) erzeugt.

4. Antriebsvorrichtung für das Elektrofahrzeug nach einem der Ansprüche 1 bis 3, wobei die Motorsteuereinheit (150) ein erforderliches Drehmoment über die erste Batterie (191) und den ersten Wechselrichter (160) erzeugt und die zweite Batterie (192) über den zweiten Wechselrichter (170) lädt, wenn der Verbrennungsmotor (110) betrieben wird.

5. Antriebsvorrichtung für das Elektrofahrzeug nach einem der Ansprüche 1 bis 4, wobei die Motorsteuereinheit (150) die erste Batterie (191) und die zweite Batterie (192) über den ersten Wechselrichter (160) und den zweiten Wechselrichter (170) lädt, wenn der Verbrennungsmotor (110) betrieben wird.

6. Antriebsvorrichtung für das Elektrofahrzeug nach einem der Ansprüche 1 bis 5, wobei:
die Motorsteuereinheit (150) die zweite Batterie (192) über den ersten Wechselrichter (160) und den zweiten Wechselrichter (170) mit der Ladespannung der ersten Batterie (191) lädt, wenn der Verbrennungsmotor (110) gestoppt ist, und
der Motor (120) entsprechend dem Wicklungsverhältnis der Hauptwicklung (131) zur Hilfswicklung (132) als Transformator arbeitet.

7. Antriebsvorrichtung für das Elektrofahrzeug nach einem der Ansprüche 1 bis 6, wobei:
die Hilfswicklung (132) unter Verwendung eines Haarnadelwicklungsverfahrens gewickelt ist, und
die Hilfswicklung (132) näher am Rotor als die Hauptwicklung (131) angeordnet ist.

8. Antriebsvorrichtung für das Elektrofahrzeug nach einem der Ansprüche 1 bis 7, wobei die Motorsteuereinheit (150) den ersten Schalter (293) einschaltet und den zweiten Schalter (294) ausschaltet, um das erforderliche Drehmoment über die erste Batterie (291), den ersten Wechselrichter (260) und den zweiten Wechselrichter (270) zu erzeugen.

9. Antriebsvorrichtung für das Elektrofahrzeug nach einem der Ansprüche 1 bis 8, wobei, wenn der Verbrennungsmotor (210) betrieben wird, die Motorsteuereinheit (150) den ersten Schalter (293) ausschaltet und den zweiten Schalter (294) einschaltet, um das erforderliche Drehmoment über die erste Batterie (291) und den ersten Wechselrichter (260) zu erzeugen und die zweite Batterie (292) über den zweiten Wechselrichter (270) zu laden.

10. Antriebsvorrichtung für das Elektrofahrzeug nach einem der Ansprüche 1 bis 9, wobei, wenn der Verbrennungsmotor (210) betrieben wird, die Motorsteuereinheit den ersten Schalter (293) ausschaltet und den zweiten Schalter (294) einschaltet, um die erste Batterie (291) über den ersten Wechselrichter (260) zu laden und um die zweite Batterie (292) über den zweiten Wechselrichter (270) zu laden.

11. Antriebsvorrichtung für das Elektrofahrzeug nach einem der Ansprüche 1 bis 10, wobei:
wenn der Verbrennungsmotor (210) gestoppt ist, die Motorsteuereinheit den ersten Schalter (293) ausschaltet und den zweiten Schalter (294) einschaltet, um die zweite Batterie (292) über den ersten Wechselrichter (260) und den zweiten Wechselrichter (270) mit der Ladespannung der ersten Batterie (291) zu laden, und
der Motor (120) entsprechend dem Wicklungsverhältnis der Hauptwicklung (231) zur Hilfswicklung (232) als Transformator arbeitet.

## Revendications

1. Dispositif d'entraînement pour un véhicule électrique, comprenant :
un moteur électrique (120) comprenant un stator (130) ayant un enroulement principal (131) et un enroulement auxiliaire (132), et un rotor (140) tournant sous l'effet de l'interaction magnétique entre l'enroulement principal (131) et l'enroulement auxiliaire (132) ;
un moteur à combustion interne (110) prévu pour entraîner sélectivement le rotor (140) en rotation ;
un contrôleur (150) de moteur électrique comprenant un premier onduleur (160, 260) relié à l'enroulement principal (131) et un deuxième onduleur (170, 270) relié à l'enroulement auxiliaire (132) ;
une première batterie (191, 291) reliée au premier onduleur (160, 260) et prévue pour exciter le moteur électrique (120) ou prévue pour être chargée par le moteur électrique (120) ;
une deuxième batterie (192, 292) reliée au deuxième onduleur (170, 270), prévue pour être chargeable par le moteur électrique (120), et dont la tension de charge est inférieure à celle de la première batterie (191, 291),
**caractérisé**
**en ce qu'**il comprend en outre un contrôleur de courant de champ (180) relié électriquement au rotor (140) du moteur électrique (120), le rotor (140) comportant un enroulement inducteur (141), et le contrôleur de courant de champ (180) étant électriquement relié à l'enroulement inducteur (141) du rotor,
un premier commutateur (293) est prévu pour relier une extrémité de sortie de la première batterie (291) à une extrémité de sortie de la deuxième batterie (292), et un deuxième commutateur (294) est prévu entre le premier commutateur (293) et la deuxième batterie (292), et
un interrupteur est prévu entre le contrôleur de courant de champ (180) et l'enroulement inducteur (141), lequel est destiné à protéger le contrôleur de courant de champ (180) d'une tension amplifiée survenant si la deuxième batterie (192) est chargée avec une tension de charge de la première batterie (191) dans un état où le moteur à combustion interne (110) et le rotor (140) sont arrêtés.

2. Dispositif d'entraînement pour véhicule électrique selon la revendication 1, où le contrôleur (150) de moteur électrique génère un couple exigé par l'intermédiaire de la première batterie (191) et du premier onduleur (160) quand le moteur à combustion interne (110) est entraîné.

3. Dispositif d'entraînement pour véhicule électrique selon la revendication 1 ou la revendication 2, où le contrôleur (150) de moteur électrique génère un couple maximal par l'intermédiaire de la première batterie (191), du premier onduleur (160), de la deuxième batterie (192) et du deuxième onduleur (170).

4. Dispositif d'entraînement pour véhicule électrique selon l'une des revendications 1 à 3, où le contrôleur (150) de moteur électrique génère un couple exigé par l'intermédiaire de la première batterie (191) et du premier onduleur (160), et charge la deuxième batterie (192) par l'intermédiaire du deuxième onduleur (170) quand le moteur à combustion interne (110) est entraîné.

5. Dispositif d'entraînement pour véhicule électrique selon l'une des revendications 1 à 4, où le contrôleur (150) de moteur électrique charge la première batterie (191) et la deuxième batterie (192) par l'intermédiaire du premier onduleur (160) et du deuxième onduleur (170) quand le moteur à combustion interne (110) est entraîné.

6. Dispositif d'entraînement pour véhicule électrique selon l'une des revendications 1 à 5, où :
le contrôleur (150) de moteur électrique charge la deuxième batterie (192) avec la tension de charge de la première batterie (191) par l'intermédiaire du premier onduleur (160) et du deuxième onduleur (170), quand le moteur à combustion interne (110) est arrêté, et
le moteur électrique (120) fonctionne comme transformateur en fonction d'un rapport de nombre de tours entre l'enroulement principal (131) et l'enroulement auxiliaire (132).

7. Dispositif d'entraînement pour véhicule électrique selon l'une des revendications 1 à 6, où :
l'enroulement auxiliaire (132) est enroulé au moyen d'un procédé d'enroulement en épingle à cheveux, et
l'enroulement auxiliaire (132) est plus proche du rotor que l'enroulement principal (131).

8. Dispositif d'entraînement pour véhicule électrique selon l'une des revendications 1 à 7, où le contrôleur (150) de moteur électrique active le premier commutateur (293) et désactive le deuxième commutateur (294) pour générer un couple exigé par l'intermédiaire de la première batterie (291), du premier onduleur (260) et du deuxième onduleur (270).

9. Dispositif d'entraînement pour véhicule électrique selon l'une des revendications 1 à 8, où, quand le moteur à combustion interne (210) est entraîné, le contrôleur (150) de moteur électrique désactive le premier commutateur (293) et active le deuxième commutateur (294) pour générer un couple exigé par l'intermédiaire de la première batterie (291) et du premier onduleur (260), et pour charger la deuxième batterie (292) par l'intermédiaire du deuxième onduleur (270).

10. Dispositif d'entraînement pour véhicule électrique selon l'une des revendications 1 à 9, où, quand le moteur à combustion interne (210) est entraîné, le contrôleur de moteur électrique désactive le premier commutateur (293) et active le deuxième commutateur (294) pour charger la première batterie (291) par l'intermédiaire du premier onduleur (260) et pour charger la deuxième batterie (292) par l'intermédiaire du deuxième onduleur (270).

11. Dispositif d'entraînement pour véhicule électrique selon l'une des revendications 1 à 10, où :
quand le moteur à combustion interne (210) est arrêté, le contrôleur de moteur électrique désactive le premier commutateur (293) et active le deuxième commutateur (294) pour charger la deuxième batterie (292) avec la tension de charge de la première batterie (291) par l'intermédiaire du premier onduleur (260) et du deuxième onduleur (270), et
le moteur électrique (120) fonctionne comme transformateur en fonction d'un rapport de nombre de tours entre l'enroulement principal (231) et l'enroulement auxiliaire (232).
